# EUROPÄISCHE PATENTSCHRIFT

(11) **EP 0 481 397 B1**
(45) Veröffentlichungstag und Bekanntmachung des Hinweises auf die Patenterteilung: **27.04.1994**
(21) Anmeldenummer: 91117474.6
(22) Anmeldetag: 14.10.1991
(51) Int. Cl.: C02F 11/12, B01D 33/04

(54) **Verfahren zum Entwässern von Suspensionen od.dgl. schlammartigen Gemischen**
Process for the removal of water from suspensions or similar muddy mixtures
Procédé pour la déshydratation de suspensions ou de mélanges boueux similaires

(30) Priorität: 18.10.1990 DE 4033022; 17.05.1991 DE 4116146
(43) Veröffentlichungstag der Anmeldung: 22.04.1992
(73) Patentinhaber: Alb. Klein GmbH & Co. KG, D-57568 Niederfischbach (DE)
(72) Erfinder: Bastgen, Wendel, Dipl.-Ing., W-5240 Betzdorf/Sieg (DE); Klein, Otto, W-5905 Freudenberg (DE)
(74) Vertreter: Hiebsch, Gerhard F., Dipl.-Ing.

(56) Entgegenhaltungen:
- DE-A- 2 517 842
- DE-B- 1 094 196
- LU-A- 40 179

## Beschreibung

Die Erfindung betrifft ein Verfahren zum Entwässern von Suspensionen od.dgl. Schlammartigen Gemischen, insbesondere von Klärschlämmen in einer von Filterbändern gebildeten Hochdruckpresszone nach Vorentwässerung.

Zur Klärschlammentwässerung werden vielfach Siebbandpressen eingesetzt, die jedoch häufig nicht die Feststoffgehalte erreichen, wie sie von den Deponieverwaltungen für die Ablagerung der Preßkuchen gefordert werden. Um Deponiefähigkeit zu erzielen, werden daher zunehmend Hochdruckbandpressen zur Schlammentwässerung verwendet, wie sie beispielsweise in der DE-PS 27 20 178 der Anmelderin beschrieben ist. Um eine möglichst hohe Kapazitätsauslastung der relativ teueren Hochdruckbandpressen zu erreichen, gehört es heute zum Stande der Technik, dem eigentlichen Hochdruckteil eine Vorentwässerungsstufe in Form eines Seihbandes oder einer rotierenden Siebtrommel vorzuschalten; damit wird bereits eine große Filtratmenge auf einfache und billige Weise abgetrennt und die Hochdruckpresse nur noch mit dem verbleibenden aufkonzentrierten Rest des Dünnschlammes beschickt.

Hochdruckbandpressen erreichen einen Feststoffgehalt im Preßkuchen, der etwa 5 bis 10 % höher ist als bei Entwässerung auf normalen Siebbandpressen. Voraussetzung dafür ist jedoch, daß der zu entwässernde Klärschlamm ausreichende Entwässerungsqualität aufweist, damit der in Hochdruckbandpressen erzielbare Preßdruck überhaupt angewendet werden kann. Um Hochdruckbandpressen mit Erfolg auch bei schwierigen Schlämmen einsetzen zu können -- wie z.B. bei biologischem Überschußschlamm, der nur eine sehr geringe Preßstabilität besitzt, schon bei geringer Druckbeanspruchung infolge seiner thixotropen und strukturviskosen Eigenschaften zu fließen beginnt und durch die Maschen des Filtertuches gepreßt wird -- ist es üblich, derartigen Dünnschlamm, Sägemehl oder Torfmull als sturkturbildende Stoffe unterzumischen. Der Schlamm wird durch diese Zugabe druckstabiler und kann mit hohen Preßdrücken auf deponiefähige Konsistenz entwässert werden. Die Nachteile dieses Verfahrens bestehen darin, daß einerseits große Mengen entsprechender Zuschlagstoffe kostenträchtig beschafft, zur Kläranlage transportiert und dort bevorratet werden müssen und daß andererseits durch die Zuschlagstoffe die zu deponierende Abfallmenge erheblich vergrößert wird. Die Zugabe von 10 kg Sägemehl/m³ Dünnschlamm mit 3 % Feststoffgehalt vergrößert die Deponiemenge um 33 %.

Es ist auch bekannt, die Preßkuchenmenge durch eine nachgeschaltete thermische Trocknung mit direkter oder indirekter Beheizung zu verringern. Diese Trockner erreichen zwar eine sehr weitgehende Mengenreduzierung, stellen aber eine teure Investition dar und arbeiten mit sehr hohen Betriebskosten. Darüber hinaus werden bei den auftretenden Temperaturen im Trockengut eine Reihe von stark umweltgefährdenden Schadstoffen und äußerst unangenehm riechende Schwefel- und Eiweißverbindungen ausgetrieben, die in sehr aufwendigen Verfahren aus den Brüden bzw. Kondensaten der Trockner abgeschieden werden müssen. Diese Stoffe werden in der Regel in die Kläranlage zurückgeleitet und belasten diese mit ihrem hohen biologischen und chemischen Sauerstoffbedarf erheblich.

Angesichts dieses Standes der Technik hat sich der Erfinder das Ziel gesetzt, unter Vermeidung oben beschriebener Mängel kostengünstig und umweltschonend die bei der Klärschlammentwässerung verbleibende Restmenge weitgehend zu reduzieren.

Zur Lösung dieser Aufgabe führt, daß der Klärschlamm vor der Hochdruckbehandlung mit aus dem Preßkuchen der Hochdruckpreßzone durch Trocknen gewonnenem feingemahlenem Trockengut vermischt wird und die Trocknung des Preßkuchens durch Kaltluft erfolgt. Dabei wird das feingemahlene Trockengut bevorzugt zwischen Vorentwässerung und Hochdruckpreßzone zugemischt, kann jedoch auch bereits bei einer dem Vorentwässern vorangehenden Flockung dem Schlamm zugemischt werden, gegebenenfalls zwischen der Flockungszone und der Vorentwässerung.

Als besonders günstig hat es sich erwiesen, dem vorentwässerten Klärschlamm vor der Hochdruckpreßzone gemahlene Trockensubstanz in einem Verhältnis von 1 : 0,5 bis 1 : 10, bezogen auf den Feststoffgehalt im Schlamm, zuzugeben - insbesondere 1 : 1 bis 1 : 5.

Nach der erfindungsgemäßen Lehre wird also der Klärschlamm vor oder nach dessen Vorentwässerung mit getrocknetem und fein vermahlenem Preßkuchen gemischt, mit Hochdruckbandpressen mechanisch weitgehend entwässert, granuliert und in einem Kaltluftstrom getrocknet. Je nach Verwendungszweck kann dabei entweder nur die für die Erzeugung des Rückgutes notwendige Preßkuchenmenge getrocknet werden, der restliche Preßkuchen wird als solcher deponiert oder als Dünger in der Landwirtschaft eingesetzt.

Ebenso kann aber auch der gesamte Preßkuchenanfall getrocknet werden, aus dem Trockengut wird dann ein Teilstrom abgezweigt zur strukturbildenden Konditionierung des vorentwässerten Dünnschlammes, das restliche Trockengut kann deponiert, verbrannt oder landwirtschaftlich genutzt werden.

Um bei der Kaltlufttrocknung einen hohen Wirkungsgrad zu erreichen, ist erfindungsgemäß eine vorherige Granulierung des Preßkuchens auf Partikelgrößen von 0,3 bis 0,6 mm erforderlich. Weiter ist Voraussetzung, daß dieses Granulat nicht miteinander verklebt. Diese Bedingungen werden nur erfüllt von Preßkuchen, die je nach Schlammart statisch mit Hochdruckbandpressen auf 35 bis 50 % TS entwässert worden sind. Derartige Preßkuchen lassen sich mit einfachen Paddelwellen problemlos auf die gewünschte Korngröße zerkleinern.

Erfindungsgemäß wird dieses Klärschlamm-Granulat gleichmäßig in Schichtdicken zwischen 1 und 20 cm auf ein horizontal umlaufendes Siebband verteilt, durch das Luft mit Umgebungstemperatur strömt. Beim Durchtritt durch die feuchte Granulatschicht sättigt sich die Luft mit Feuchtigkeit und trocknet dabei das Granulat. Die im Schlamm enthaltenen aeroben Bakterien entwickeln unter den für sie sehr günstigen Bedingungen eine verstärkte Tätigkeit, wodurch in gewissem Umfang eine Temperaturerhöhung im Granulat die Trocknung beschleunigt und gleichzeitig eine zusätzliche aerobe Stabilisation stattfindet. Diese biogene Temperaturerhöhung bleibt jedoch weit unter der Temperatur, bei der Geruchsemission auftritt oder Schadstoffe ausgetrieben werden, so daß die bei der thermischen Trocknung bekannten Nachteile vermieden werden.

Eine besonders günstige Vorrichtung zur Durchführung dieses Verfahrens zeichnet sich dadurch aus, daß dem Austrag einer Hochdruckbandpresse vor und/oder nach einem Zerkleinerungsorgan wenigstens ein Trockner nachgeordnet ist, wobei der Austrag des Trockners oder des diesem nachgeschalteten Zerkleinerungsorgans -- bevorzugt eine Paddelschnecke -- mit einer Aufgabeeinrichtung der Filterpresse verbunden ist, so daß auf einfache Weise zerkrümeltes Trockengut, das aus dem Filterkuchen gewonnen wird, erneut zum Klärschlamm gelangt und mit diesem in Erhöhung der Filterleistung die Preßzonen durchwandert.

Als günstig hat es sich auch erwiesen, als Trockner einen Kaltlufttrockner einzusetzen, in dem wenigstens ein das zu trocknende Fördergut aufnehmendes Siebband vorgesehen ist.

Bei entsprechendem Luftdurchsatz reicht bei der Kalttrocknung in der Regel das Trocknungspotential der Umgebungsluft aus, um einen Feststoffgehalt von mindestens 80 % im Trockengut zu erzielen. Lediglich bei sehr ungünstigen Witterungsverhältnissen (z.B. relative Luftfeuchtigkeit über 80 % bei Temperaturen unter 5°C) ist eine geringfügige Aufheizung der Trockungsluft um 5 bis 10°C durch Zuschaltung einer entsprechenden Heizquelle (Gas- oder Ölbrenner bzw. Elektroheizung) erforderlich.

Bei durchschnittlichen Klimaverhältnissen wird keine Zusatzheizung benötigt, die gesamte Verdunstungsleistung wird vom kostenlos zur Verfügung stehenden Trockungspotential der Umgebungsluft aufgebracht, als Energieaufwand muß lediglich die elektrische Leistung für die Antriebe des Trockners und des Niederdruckventilators angesetzt werden. Sie beträgt bei Entwässerung und Kalttrocknung eines 3%igen Klärschlammes auf 80 % Resttrockengehalt (entspricht einer Restmenge von 37,5 kg Trockengranulat/m³ Dünnschlamm als Deponiemenge) etwa 3 kWh/m³ Dünnschlamm oder etwa 100 kWh/t Trockensubstanz. Thermische Trocknungsanlagen mit direkter oder indirekter Beheizung verbrauchen die 10- bis 40-fache Energiemenge unter sonst gleichen Verhältnissen.

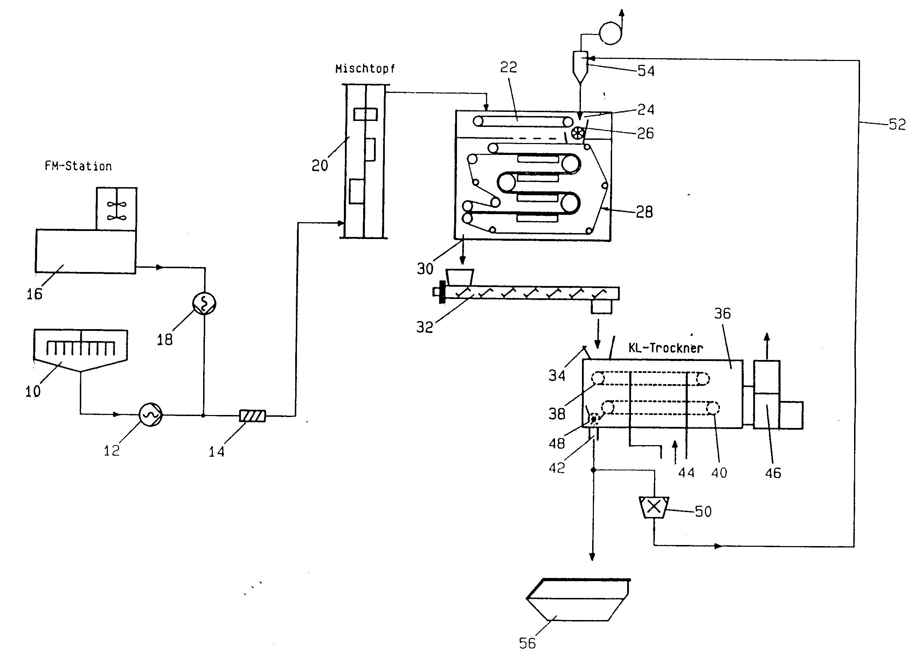

Weitere Vorteile, Merkmale und Einzelheiten der Erfindung ergeben sich aus der nachfolgenden Beschreibung bevorzugter Ausführungsbeispiele sowie anhand der Zeichnung, deren einzige Figur ein Verfahrensschema zu einer Schlammentwässerung darstellt.

Aus einer bei 10 symbolisch angedeuteten Kläranlage kommender und zu entwässernder Dünnschlamm wird mit einer stufenlos einstellbaren Exzenterschneckenpumpe als Schlammdosierpumpe 12 in einen regelbaren Mischer 14 gefördert, dort intensiv mit einer verdünnten Polyelektroyltlösung vermengt, die in einer Flockungsmittelaufbereitungsstation 16 angesetzt und mit einer Flockungsmitteldosierpumpe 18 in den Mischer 14 dosiert wird.

Der geflockte Schlamm wird in einen Reaktionsmischer 20 zur Optimierung der Flockung gefördert und gelangt von dort auf ein Seihband 22 zur Vorentwässerung.

In einem dem Seihband 22 nachgeordneten Aufgabetrichter 24 einer Hochdruckbandpresse 28 befindet sich ein Zellenrad als Mischeinrichtung 26, in welcher der vorentwässerte Schlamm mit -- in einer Trockengutleitung 52 eines bei 46 angedeutetem Trockengutbehälters -- rückgeführtem Trockengut gemischt wird. Der Aufgabetrichter 24 dient als Pufferbehälter für den im gewählten Ausführungsbeispiel taktweise arbeitenden Hochdruck-Preßvorgang. Das Tiefste des Aufgabetrichters 24 besteht hier aus dem Obertrum eines oberen Filterbandes der Hochdruckbandpresse 28, welche sich im Taktverfahren mit einstellbaren Verweilzeiten etwa um jeweils eine Preßkammerlänge a bis zu einer ersten Preßstation vorwärts bewegt, die als variable Keilzone zwischen oberem Filterband und einem unteren Filterband ausgebildet ist, eine exakt einstellbare Schichtdicke an ihrem Austrittsende ermöglicht und zudem weitere Flüssigkeit auspreßt.

Die vorentwässerte Schlammschicht wird zwischen den beiden Filterbändern im Taktverfahren in eine erste Preßkammer gefördert, in der der Schlamm zwischen den beiden Filterbändern durch beidseits angelegte perforierte Druckplatten als Druckorgane mit einem stufenlos einstellbaren Druck gepreßt wird. Der Preßkammer sind weitere Preßkammern nachgeordnet, durch welche die Filterbänder mäanderartig um Umlenkwalzen geführt sind.

So wird das Gemisch im Taktverfahren in der Hochdruckbandpresse 28 zu einem plattenförmigen Preßkuchen entwässert, der bei 30 aus der Hochdruckbandpresse 28 austritt und mit einer Paddelschnecke 32 unter gleichzeitiger Granulierung in einen Aufgabeschacht 34 eines Kaltlufttrockners 36 gefördert wird. Dieser ist mit zwei Etagen aus zwei endlosen, horizontalen Siebbändern 38, 40 dargestellt. Auf diesen wird das Granulat in gleichmäßiger Schicht verteilt und wandert in der oberen Etage 38 von links nach rechts, wird am Ende der oberen Etage 38 auf die darunterliegende Etage 40 abgeworfen und von rechts nach links zu einem Austrag 42 transportiert.

Während des gesamten Transportes in der ersten und zweiten Etage 38 bzw. 40 wird die Granulatschicht von Kaltluft durchströmt, die unten bei 44 in den Kaltlufttrockner 36 eintritt und an der Stirnseite durch einen Ventilator 46 abgesaugt wird. Nach Durchlaufen des Kaltlufttrockners 36 wird das durch Verdunstung getrocknete Granulat mit einer Zellenradschleuse 48 aus dem Kaltlufttrockner 36 ausgetragen. Ein der Rückgutmenge entsprechender Teilstrom wird über eine Mühle 50 geleitet, dort auf die erforderliche Korngröße vermahlen und über die bereits erwähnte Trockengutleitung 52 in einen Vorratsbehälter 54 vor dem Aufgabetrichter 24 gefördert. Das restliche Granulat gelangt in einen Container 56 zum Abtransport.

Falls der Preßkuchen als Endprodukt gewünscht wird, erfolgt die Aufteilung bereits beim Abwurf 30 der Hochdruckbandpresse 28. Die für die Erzeugung des Trockengutes erforderliche Menge wird in der Paddelschnecke 32 granuliert, im Kaltlufttrockner 36 getrocknet, anschließend in der Mühle 50 gemahlen und gelangt als trockenes feingut in den Vorratsbehälter 54, der übrige Preßkuchen wird direkt in den Container 56 abgeworfen.

Bei einer in der Zeichnung nicht dargestellten Ausführung des Verfahrens wird die Trockengutleitung 52 bis zum Mischtopf 20 zurückgeführt, d. h. das Trockengut bereits dort dem Schlamm zugattiert.

## Patentansprüche

1. Verfahren zum Entwässern von Suspensionen od.dgl. schlammartigen Gemischen, insbesondere von Klärschlämmen, in einer von Filterbändern gebildeten Hochdruckpresszone nach Vorentwässerung,
dadurch gekennzeichnet,
daß der Klärschlamm vor der Hochdruckbehandlung mit aus dem Preßkuchen der Hochdruckpresszone durch Trocknen gewonnenem feingemahlenem Trockengut vermischt wird und die Trocknung des Preßkuchens durch Kaltluft erfolgt.

2. Verfahren nach Anspruch 1, bei dem die Suspension vor der Vorentwässerung geflockt wird, dadurch gekennzeichnet, daß das Trockengut an der Flockungszone dem Klärschlamm zugegeben wird.

3. Verfahren nach Anspruch 2, dadurch gekennzeichnet, daß das Trockengut nach dem Flocken zugegeben wird.

4. Verfahren nach Anspruch 1, dadurch gekennzeichnet, daß das Trockengut nach dem Vorentwässern des Klärschlammes diesem zugemischt wird.

5. Verfahren nach einem der Ansprüche 1 bis 4, dadurch gekennzeichnet, daß dem vorentwässerten Klärschlamm vor der Hochdruckpresszone gemahlenes Trockengut in einem Verhältnis von 1 : 0,5 bis 1 : 10, insbesondere 1 : 1 bis 1 : 5, bezogen auf den Feststoffgehalt des Schlammes, zugegeben wird.

6. Verfahren nach einem der Ansprüche 1 bis 5, dadurch gekennzeichnet, daß das Trockengut dem Klärschlamm kontinuierlich zugegeben wird.

7. Verfahren nach wenigstens einem der Ansprüche 1 bis 6, dadurch gekennzeichnet, daß das Trockengut auf eine Korngröße von 0 bis 3 mm, bevorzugt 0,1 bis 1,5 mm, gemahlen wird.

8. Verfahren nach Anspruch 1, dadurch gekennzeichnet, daß die Trocknung des Preßkuchens durch Kaltluft mit Umgebungstemperatur erfolgt und die Feuchtigkeit bei niedriger Temperatur verdunstet.

9. Verfahren nach wenigstens einem der Ansprüche 1 bis 8, dadurch gekennzeichnet, daß die Menge des zu trocknenden Preßkuchens der Menge des Trockengutes entspricht, die zur Erreichung des gewünschten Feststoffgehaltes im Preßkuchen der Hochdruckpresszone erforderlich ist.

10. Verfahren nach wenigstens einem der Ansprüche 1 bis 9, dadurch gekennzeichnet, daß das Gemisch statisch auf 35 % bis 50 % entwässert wird.

## Claims

1. Process for dewatering suspensions or other muddy mixtures, especially sewage sludge, in a high-pressure stage formed by filter belts after preliminary dewatering, characterised in that, prior to the high-pressure treatment, the sewage sludge is mixed with finely ground dry product recovered by drying from the filter cake of the high-pressure stage and the filter cake is dried using cold air.

2. Process according to claim 1, in which the suspension is flocculated prior to preliminary dewatering, characterised in that the dry product is added to the sewage sludge at the flocculation stage.

3. Process according to claim 2, characterised in that the dry product is added after flocculation.

4. Process according to claim 1, characterised in that the dry product is mixed with the sewage sludge after preliminary dewatering thereof.

5. Process according to one of claims 1 to 4, characterised in that ground dry product is added to the preliminarily dewatered sewage sludge in a ratio of 1 : 0.5 to 1 : 10, especially 1 : 1 to 1 : 5 in relation to the solids content of the sludge prior to the high-pressure stage.

6. Process according to one of claims 1 to 5, characterised in that the dry product is added continuously to the sewage sludge.

7. Process according to at least one of claims 1 to 6, characterised in that the dry product is ground to a particle size of 0 to 3 mm, preferably 0.1 to 1.5 mm.

8. Process according to claim 1, characterised in that the filter cake is dried using cold air at ambient temperature and the moisture is evaporated at a low temperature.

9. Process according to at least one of claims 1 to 8, characterised in that the quantity of filter cake to be dried corresponds to the quantity of dry product required to obtain the desired solids content in the filter cake of the high-pressure stage.

10. Process according to at least one of claims 1 to 9, characterised in that the mixture is statically dewatered to 35 % to 50 %.

## Revendications

1. Procédé de déshydratation de suspensions ou de mélanges analogues du type boues, notamment de boues de décantation, dans une zone de pressage à haute pression formée par des bandes filtrantes, après déshydratation préalable, caractérisé en ce que la boue de décantation est mélangée, avant son traitement sous haute pression, à du produit sec finement broyé, obtenu par séchage à partir du tourteau de la zone de pressage à haute pression, le séchage du tourteau s'effectuant par de l'air froid.

2. Procédé selon la revendication 1, dans lequel la suspension subit une floculation avant la déshydratation préalable, caractérisé en ce que le produit sec est ajouté à la boue de décantation, au niveau de la zone de floculation.

3. Procédé selon la revendication 2, caractérisé en ce que le produit sec est ajouté après la floculation.

4. Procédé selon la revendication 1, caractérisé en ce que le produit sec est mélangé à la boue de décantation, après la déshydratation préalable de celle-ci.

5. Procédé selon les revendications 1 à 4, caractérisé en ce que l'on ajoute, en amont de la zone de pressage à haute pression, à la boue de décantation ayant subi la déshydratation préalable, du produit sec broyé, selon une proportion allant de 1 : 0,5 à 1 : 10, notamment de 1 : 1 à 1 : 5, rapportée à la teneur en substances solides de la boue.

6. Procédé selon l'une des revendications 1 à 5, caractérisé en ce que le produit sec est ajouté de manière continue à la boue de décantation.

7. Procédé selon l'une au moins des revendications 1 à 6, caractérisé en ce que le produit sec est broyé à une grosseur de grain de 0 à 3 mm, de préférence de 0,1 à 1,5 mm.

8. Procédé selon la revendication 1, caractérisé en ce que le séchage du tourteau est effectué au moyen d'air froid à la température ambiante, l'humidité s'évaporant à basse température.

9. Procédé selon l'une au moins des revendications 1 à 8, caractérisé en ce que la quantité de tourteau à sécher correspond à la quantité du produit sec nécessaire à l'obtention de la teneur en substances solides souhaitée dans le tourteau de la zone de pressage à haute pression.

10. Procédé selon l'une au moins des revendications 1 à 9, caractérisé en ce que le mélange est déshydraté statiquement à une valeur de 35 % à 50 %.
